# EUROPEAN PATENT APPLICATION

(11) **EP 1 112 684 A1**
(43) Date of publication of application: **04.07.2001**
(21) Application number: 99830808.4
(22) Date of filing: 28.12.1999
(51) Int. Cl.: A01K 5/02

(54) **Pet feeding container**

(71) Applicant: Eat Easy S.r.l., 10143 Torino (IT)
(72) Inventor: Grassano, Nicola, 10123 Torino (IT)
(74) Representative: Spandonari, Carlo, Dr. Ing.

(57) **Abstract**

The pet feeding container comprises a body having an integral bowl (26), and a hinged cover (46) extending over the bowl in a closed position. An elongated, partly inflated airbag (66) is housed in a cavity extending continuously within the body and the cover. A footboard (30) is movable in an aperture of the body and is adapted to squeeze a portion of the airbag (66) when pressed, thus chasing air toward the cover (46) and lifting the cover. A dispensable, thin, concave shell (34), preferably divided into two compartments for food and water, respectively, is snugly received within the bowl (26).

## Description

### Disclosure

This invention is concerned with a feeding container for domestic pets, particularly for cats and dogs. Domestic pets usually feed from a food bowl placed on the floor, and a separate bowl is provided for drinking water. Such bowls are often regarded as a nuisance, because they generally have a messy look, because they often smell, and also because they attract flies. Because of this, food containers have been proposed which are provided with a cover, and which are opened by mechanical and/or electrical devices, which can be variously operated either by a timer or by a lever pressed by the pet itself.

However, the known devices all suffer from one or more of different disadvantages. Purely mechanical devices generally include springs, linked levers and other mechanisms which easily break under the wear and tear of pets trampling about them. On the other hand, some of them require an electric supply, and this circumstance gives rise to a number of problems: the electric device is inherently dangerous, in consideration both of the presence of liquids in the bowl and of the rough handling received by the pets; the device requires a supply cable and an electric socket, which makes operation awkward.

The main object of the invention is therefore to provide a pet feeding container which is provided with a liftable cover that can be autonomously operated by the pet, without use of electric power or springs or linked leverages, and which is more reliable than known devices.

A further object is to provide a pet feeding container that can easily be maintained clean, without laborious and disagreeable cleaning operations such as washing and the like.

A further object of the invention is to implement the pet feeding container in such a way that both food and drink can be contained within the same device.

The invention achieves the above and other objects and advantages, such as will appear from the following disclosure, with a pet feeding container having the features recited in claim 1.

The invention will be further described with reference to a preferred embodiment which is disclosed in the following disclosure and is shown, by way of nonlimiting example, in the attached drawings, wherein:

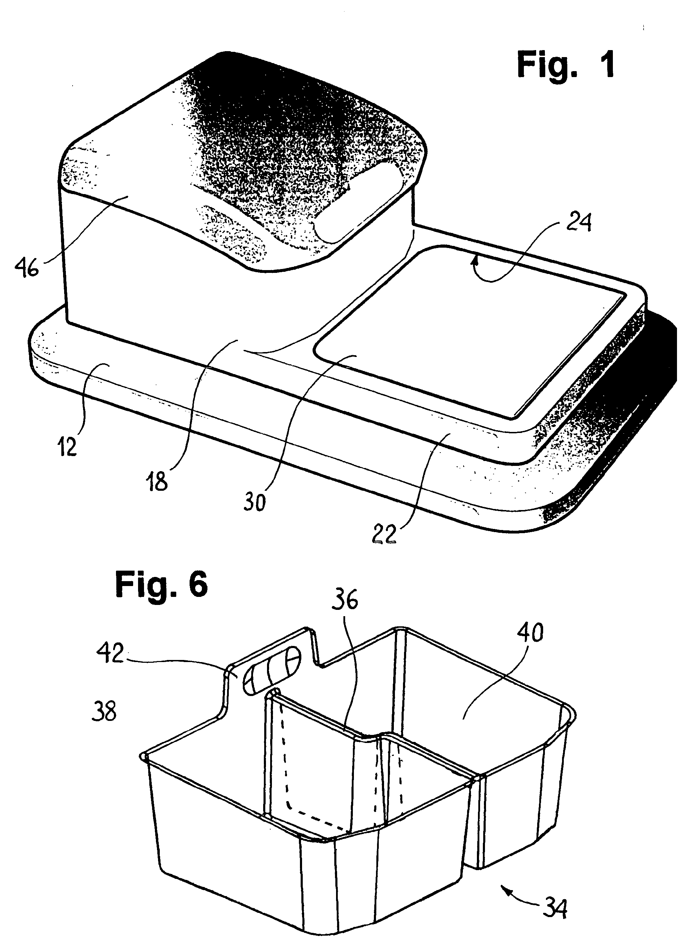

Fig. 1 is a perspective view of a pet feeding container according to the preferred embodiment of the invention;

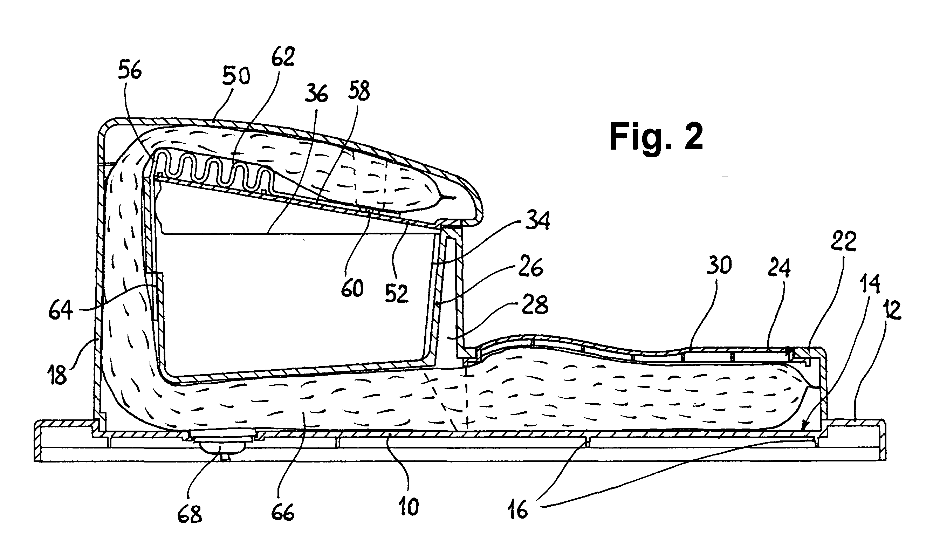

Fig. 2 is a view in longitudinal cross-section of the pet feeding container of Fig. 1, in a closed position;
Fig. 3 is another view of the pet feeding container, which is similar to Fig. 1, without an airbag for clarity of illustration, and in an open position of the container;

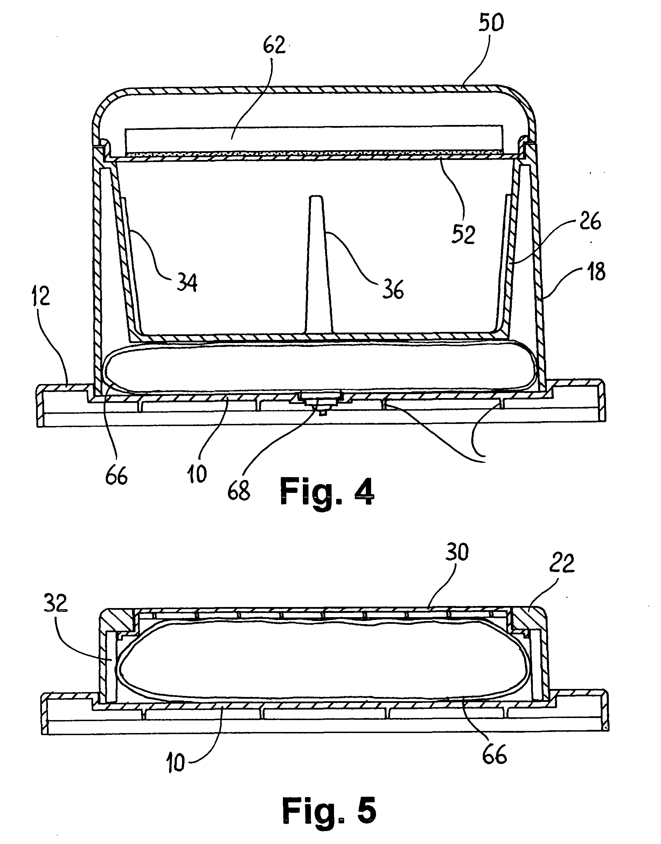

Fig. 4 is a view in transverse cross-section of the pet feeding container of Fig. 1, made along line IV-IV;
Fig. 5 is a view in transverse cross-section of the pet feeding container of Fig. 1, made along line V-V; and
Fig. 6 is a perspective view of a dispensable bucket used with the pet feeding container of the invention.

With reference to the Figures, a pet feeding container comprises a platform 10, which is molded from a synthetic material such as polystyrene or ploypropylene or the like. Platform 10 is a substantially flat, rectangular plate with rounded corners, having a continuous peripheral ledge 12, a recessed central area 14 and a grid of reinforcing ribs 16. Preferably, the underside of platform 10 is also provided with four suction cups at its corners, which are not shown in the drawings.

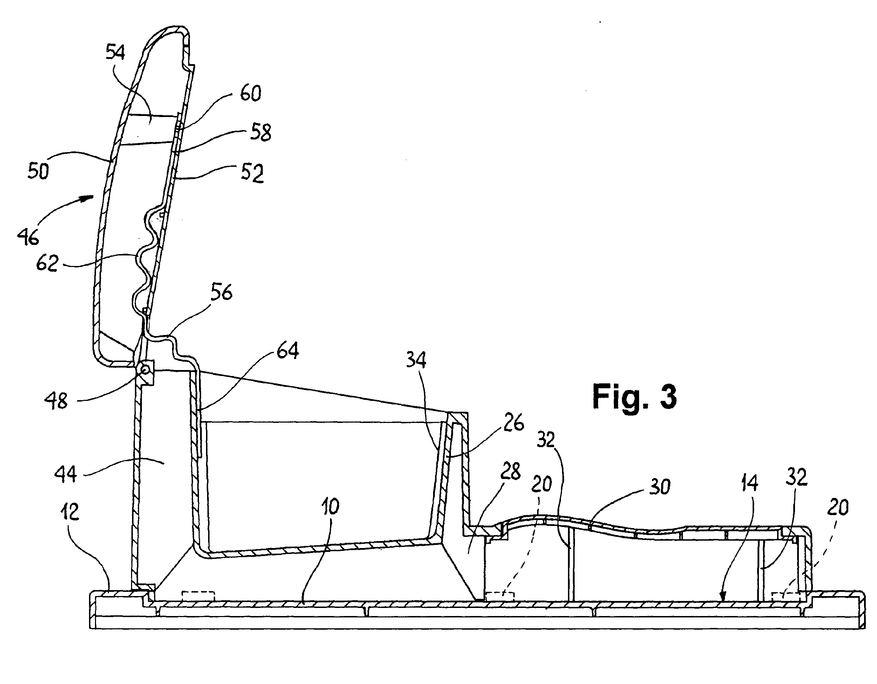

A hollow housing 18 is received in the recessed area 14 of platform 10 and is rigidly connected to the platform by means of snap-joints 20 (Fig. 3). Housing 18 has a shallow portion 22 with a wide rectangular opening 24, and a taller portion containing a moulded bowl 26, made integral with the housing by a number of webs such as 28. A footboard 30 is slidably received in opening 24, and a number of vertical ribs 32, which project from the sides of the housing underlying opening 24, act as guides to constrain the the footboard to a substantially linear, vertical motion.

Bowl 26 has a substantially rectangular plan and an inclined bottom, and a thin, dispensable shell 34 is housed in the bowl with at least portions of its envelope fitting snugly in the bowl. Shell 34, shown on Fig. 6, is moulded from a thin, semirigid film of a polymeric material, and is intended to be used for one meal, as further esxplained below. Shell 34 is moulded with a sharp ridge 36, defining two compartments 38, 40 on its sides, which are intended for food and water, respectively. A handle 42 is provided, so that the shell can be easily extracted from the bowl after use.

An elongated, horizontally extending gap is formed between the recessed cavity 14 in the platform and the mantle of housing 18, the gap extending upward through a vertical well or shaft 44 along the bowl on its side farther from footboard 30 and opening at the top of the taller portion of the housing. Both the housing and the footboard are preferably injection-moulded from the same material of platform 10.

A cover 46 extends over the top of bowl 26 and is hinged in 48 on both sides of the taller portion of housing 18. Cover 46 comprises two parts 50, 52, which are joined together by snap joints not shown, and are stiffened by spacers 54 projecting from part 50 toward part 52, to form an enclosure opening near the hinges to join shaft 44. Therefore, a continuous enclosure extends from the cover interior through the shaft along the bowl and along the platform beneath the bowl and the footboard.

A leaf 56 of an elastomeric material lies on the lower part 52 of cover 46 and has a flat end portion 58 that is fastened to the cover by projections 60 on spacers 54. Leaf 56 has an intermediate, corrugated portion 62 extending within the cover, and an opposite flat end portion 64 that is received and is hooked in a slot made in the wall of bowl 26. The corrugated portion 62 has a weakly elastic property, so that, when the cover is lifted and the corrugated portion is stretched (as shown on Fig. 3), it will exert a weak returning action, that will help the cover to fall back when released, in addition to the pull of gravity. Moreover, the leaf will provide a protecting wall that shields shaft 44 from the exterior.

An elongated, flexible airbag 66 is housed in the above described enclosure between the housing and the platform, starting from the area beneath footboard 30 and extending upwards through shaft 44 and into cover 46. The airbag is provided with an inflating nipple 68. The airbag is only partly inflated, so that it will normally collapse under the weight of cover 30 and allow the cover to rest on the top of housing 18 to cover bowl 26, while the footboard is pushed high in its seat by the air pressure in the underlying airbag.

However, when an animal comes near the container and treads upon the footboard with its forepaws, the footboard will be depressed and the underlying portion of the airbag will be squeezed, thus chasing air into the remaining part of the airbag. The increased pressure will therefore straighten the portion of the airbag that is contained in the cover, thus lifting the cover around its hinges. Therefore, the pet has access to the contents of the bowl while it stands on the footboard at least with its forepaws. When the pet, after emptying the bowl, steps back and releases the footboard, the airbag becomes soft again and allows the cover to fall back to cover the bowl. The procedure is easily learnt by virtually all pets.

In use, the pet owner will insert a shell within the bowl and will fill its two compartments with food and water, respectively. The pet will then avail himself of the food and water at its leisure, and will eat and drink in one or more occasions, the container being closed and orderly at all times. When the pet owner decides to provide fresh victuals for the pet, for instance once a day, he will withdraw and discard the old shell to the garbage bin, and will insert a fresh shell in the bowl.

It can be seen that the above-disclosed pet feeding container has a highly reliable operation, because the operating member, the airbag, is able to stand much rough handling without breaking down, in contrast to linkages, gears and the like. The only mechanical links, the cover hinges, are mere positioning members and transfer virtually no force. Moreover, the pet feeding container is easily maintained clean and orderly, without need for frequent, thorough cleaning operations.

While the above-disclosed embodiment of the invention is preferred because of its low manufacturing cost, numerous changes could be brought to it within the teachings of the invention. The pet feeding container can be manufactured from different materials, in different sizes and proportions, with different numbers of parts and with different connection means. Also, certain features, such as the corrugated leaf or the separation of the shell in two compartments, or even the very existence of the shell, could be omitted without loss of the basic advantages of the invention.

## Claims

1. A pet feeding container, comprising a body having a food bowl, a hinged cover extending over the bowl in a closed position, and cover operating means operable by a pet for lifting the cover to uncover the bowl, characterized in that
the body and the cover are formed with respective gaps joining at the hinge between the cover and the body, and
the cover operating means comprise an elongated, partly inflated airbag housed in said joined gaps, and a footboard movably attached to the body and adapted to squeeze a portion of the airbag when pressed, thus stiffening it and lifting the cover.

2. The pet feeding container of claim 1, characterized in that a portion of the body beside the bowl has an aperture extending over a portion of said airbag, and the footboard is received in said aperture for slidable motion away from the aperture and toward the airbag.

3. The pet feeding container of claim 2, characterized in that the body comprises a substantially flat platform having a wide seat for reception of a hollow housing, so that said gap is formed between the housing and the platform.

4. The pet feeding container of claim 3, characterized in that the housing and the platform are connected by snap joints.

5. The pet feeding container of one of claims 1 to 4, characterized in that the cover comprises two parts which are connected together to enclose a gap, one of the parts of the covers being connected to the body by hinges.

6. The pet feeding container of any of claims 1 to 6, characterized in that it further comprises a partly corrugated leaf of an elastomeric material, extending within the cover and having one end fastened to a point of the cover, and an opposite end fastened to a point along the wall of the bowl.

7. The pet feeding container of any of claims 1 to 6, characterized in that it further comprises a shell moulded from a thin, semirigid film of a polymeric material, and received within the bowl.

8. The pet feeding container of any of claim 7, characterized in that the shell is moulded with a substantially vertical wall to define two separate compartments, for food and drink, respectively.

9. A shell moulded from a thin film of a polymeric material, for use in the pet feeding container of one of claims 7 or 8.
